# EUROPÄISCHE PATENTSCHRIFT

(11) **EP 3 580 018 B1**
(45) Veröffentlichungstag und Bekanntmachung des Hinweises auf die Patenterteilung: **07.04.2021**
(21) Anmeldenummer: 18702995.4
(22) Anmeldetag: 01.02.2018
(51) Int. Cl.: B25F 5/00, H02J 50/10

(54) **AKKUVORRICHTUNG**
BATTERY DEVICE
SYSTÈME DE BATTERIE

(30) Priorität: 10.02.2017 DE 102017202163
(43) Veröffentlichungstag der Anmeldung: 18.12.2019
(73) Patentinhaber: Robert Bosch GmbH, 70442 Stuttgart (DE)
(72) Erfinder: MACK, Juergen, 73035 Goeppingen (DE); KRUPEZEVIC, Dragan, 70565 Stuttgart (DE); GONDA, Martin, 77815 Buehl (DE)
(86) Internationale Anmeldenummer: PCT/EP2018/052516
(87) Internationale Veröffentlichungsnummer: WO 2018/145989

(56) Entgegenhaltungen:
- DE-A1-102011 078 866
- DE-A1-102014 224 575
- JP-A- 2009 262 254
- US-A1- 2016 172 890

## Beschreibung

### Stand der Technik

Es ist bereits eine Akkuvorrichtung für eine Handwerkzeugmaschine mit einer Akkuzelleneinheit und zumindest einer Induktivladeeinheit zur Aufladung der Akkuzelleneinheit, wobei die Induktivladeeinheit zumindest eine Induktivladespule mit zumindest einer Grundwicklung aufweist, vorgeschlagen worden Eine derartige Vorrichtung ist zum Beispiel aus DE 10 2011 078866 A1 bekannt.

### Offenbarung der Erfindung

Die Erfindung geht aus von einer Akkuvorrichtung gemäß Anspruch 1.

Unter einer "Akkuvorrichtung" soll in diesem Zusammenhang insbesondere eine Vorrichtung verstanden werden, welche insbesondere zu einem zumindest temporären Speichern elektrischer Energie vorgesehen ist. Vorzugsweise soll darunter insbesondere eine wiederaufladbare Energiespeichervorrichtung verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Akkuvorrichtung ist als ein Handwerkzeugakku ausgebildet. Unter einem "Handwerkzeugakku" soll insbesondere eine Vorrichtung mit mindestens einer Akkuzelleneinheit und Einheiten zu einer Auf- und Entladung der Akkuzelleneinheit verstanden werden, die dazu vorgesehen ist, eine Handwerkzeugmaschine mit Strom zu versorgen. Unter einer "Handwerkzeugmaschine" soll in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer und/oder ein Multifunktionswerkzeug oder ein Gartengerät, wie eine Hecken-, Strauch- und/oder Grasschere, verstanden werden. Alternativ kann die Akkuvorrichtung auch mit einem anderen handgeführten Elektrogerät eingesetzt werden, bespielsweise einem Smartphone oder Tablet-PC. Unter einer "Akkuzelleneinheit" soll in diesem Zusammenhang insbesondere eine wiederaufladbare Energiespeichereinheit mit zumindest einer Akkuzelle verstanden werden, welche zu einer Aufladung durch eine Einleitung eines Ladestroms und/oder zu einer zumindest temporären Speicherung elektrischer Energie vorgesehen ist. Insbesondere kann die Akkuzelleneinheit mindestens einen Akkuzellenblock aufweisen, in dem mehrere Akkuzellen in Reihe und/oder parallel geschaltet sind. Unter einer "Akkuzelle" soll insbesondere eine Einheit verstanden werden, die zu einer elektrochemischen Speicherung elektrischer Energie mittels einer reversiblen Reaktion vorgesehen ist. Die Akkuzelle kann beispielsweise von einer Bleiakkuzelle, einer NiCd-Akkuzelle, einer NiMH-Akkuzelle, bevorzugt jedoch von einer lithiumbasierten Akkuzelle gebildet sein. Die Akkuzelle kann von Akkuzellen unterschiedlicher Nennspannungen gebildet sein, beispielsweise Nennspannungen von 1,2 V, 1,5 V oder 3,6 V. Bevorzugt weisen die Akkuzellen eine Zylinderform auf. Die Akkuvorrichtung kann mehrere Akkuzellen aufweisen, die in Reihe und/oder prallel geschaltet sind, um eine höhere Gesamtspannung der Akkuvorrichtung zu erreichen. Beispielsweise kann die Akkuvorrichtung eine Akkuzelle mit einer Spannung von 3,6 V, zwei in Reihe geschaltete Akkuzellen mit einer Spannung von jeweils 3,6 V für eine Gesamtspannung der Akkuvorrichtung von 7,2 V oder drei in Reihe geschaltete Akkuzellen mit einer Spannung von jeweils 3,6 V für eine Gesamtspannung der Akkuvorrichtung von 10,8 V aufweisen. Insbesondere kann die Akkuvorrichtung ein Akkugehäuse aufweisen. Unter einem "Akkugehäuse" soll insbesondere eine Baugruppe, die mindestens ein Gehäusebauteil umfasst, verstanden werden, das die Akkuvorrichtung zumindest teilweise mit äußeren Wandungen gegenüber einer Umgebung begrenzt und das insbesondere dazu vorgesehen ist, die Induktivladeeinheit gegenüber der Umgebung zu schützen und eine Beschädigung und/oder Verschmutzung zu vermeiden.

Unter einer "Induktivladeeinheit" soll insbesondere eine Einheit zur Aufladung der Akkuzelleneinheit verstanden werden, die einen Ladestrom über Induktion empfängt und die zumindest eine Induktivladespule und eine Ladeelektronik umfasst. Vorteilhaft ist die Induktivladeeinheit zudem dazu vorgesehen, zur Steuerung einer Aufladung und insbesondere zu einer Fremdobjekterkennung mit einem Induktivladegerät zu kommunizieren. Unter einer "Induktivladespule" soll in diesem Zusammenhang insbesondere eine Spule mit zumindest einer Wicklung aus einem elektrisch leitenden Material verstanden werden, die dazu vorgesehen ist, in zumindest einem Betriebszustand eine elektrische Energie, die durch eine Induktivspule eines Induktivladegeräts übertragen wird, zu empfangen und über eine Ladeelektronik einer Akkuzelle zuzuführen. Insbesondere ist die Induktivladespule dazu vorgesehen, ein elektromagnetisches Wechselfeld in einen elektrischen Wechselstrom umzuwandeln. Bevorzugt weist das Wechselfeld eine Frequenz von 10 - 500 kHz, besonders bevorzugt von 100 - 120 kHz, auf. Insbesondere ist die Richtung senkrecht zu der Spulenebene und parallel zu einer Wicklungsachse der Induktivladespule ausgebildet. Unter einer "Ladeelektronik" soll insbesondere eine Elektronikeinheit verstanden werden, die dazu vorgesehen ist, eine Aufladung von Akkuzellen zu steuern und die insbesondere Elektronikelemente zu einer Spannungstransformation aufweist.

Unter einer "Grundwicklung" soll in diesem Zusammenhang insbesondere eine Wicklung der Induktivladespule verstanden werden, deren Wicklungsebene dazu vorgesehen ist, während eines Ladevorgangs zumindest im Wesentlichen parallel zu einer Wicklungsebene einer Induktivladespule eines Induktionsladegeräts ausgerichtet zu sein. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere verläuft die Wicklungsebene der Grundwicklung zumindest im Wesentlichen senkrecht zu einer Wicklungsachse der Grundwicklung. Unter einer "Nebenwicklung" soll in diesem Zusammenhang insbesondere eine Wicklung der Induktivladespule verstanden werden, deren Wicklungsachse und/oder Wicklungsebene von einer Wicklungsachse und/oder einer Wicklungsebene der Grundwicklung in zumindest einem Betriebszustand wesentlich abweicht. Des Weiteren ist die Grundwicklung der Induktivladespule elektrisch seriell mit der zumindest einen Nebenwicklung der Induktivladespule verbunden.

Durch eine derartige Ausgestaltung kann eine gattungsgemäße Akkuvorrichtung bereitgestellt werden, welche vorteilhafte Eigenschaften hinsichtlich geringer Außenabmessungen aufweist. Insbesondere kann die Grundwicklung der Induktivladespule durch die Anordnung der Nebenwicklungen einen vorteilhaft geringen Wicklungsdurchmesser aufweisen, wodurch insbesondere eine vorteilhaft geringe Grundfläche der Induktivladeeinheit und somit der Akkuvorrichtung erreicht werden kann.

Des Weiteren wird vorgeschlagen, dass die zumindest eine Nebenwicklung relativ zu der Grundwicklung schwenkbar ist und die zumindest eine Nebenwicklung um eine zumindest im Wesentlichen parallel zu der Wicklungsebene der Grundwicklung verlaufende Schwenkachse und vorzugsweise um eine zumindest im Wesentlichen in der Wicklungsebene der Grundwicklung verlaufenden Schwenkachse relativ zu der Grundwicklung schwenkbar ist. Insbesondere ist die zumindest eine Nebenwicklung während eines Ladevorgangs zur Positionierung relativ zu einer Induktivladespule eines Induktionsladegeräts relativ zu der Grundwicklung schwenkbar. Außerdem ist die zumindest eine Nebenwicklung zu einer Vergrößerung einer Ladefläche der Induktivladespule in eine Ebene mit der Grundwicklung schwenkbar. Hierdurch kann eine Ladefläche der Induktivladespule vorteilhaft an eine Induktivladespule eines Induktionsladegeräts angepasst werden. Ferner kann eine vorteilhafte Energieübertragung ermöglicht werden. Zusätzlich kann eine vorteilhaft flexible Einsetzbarkeit der Akkuvorrichtung ermöglicht werden.

Ferner wird vorgeschlagen, dass die Grundwicklung und/oder die zumindest eine Nebenwicklung zumindest teilweise auf ein flexibles Substrat aufgebracht ist/sind. Vorzugsweise sind sowohl die Grundwicklung als auch die zumindest eine Nebenwicklung auf einem flexiblen Substrat, beispielsweise einer Kunststofffolie, aufgebracht. Insbesondere können die Grundwicklung und/oder die zumindest eine Nebenwicklung in Form einer leitfähigen Tinte auf das flexible Substrat aufgedruckt sein. Hierdurch kann eine vorteilhaft flexible Einpassung der Induktivladespule und/oder ein vorteilhaft einfaches Verschwenken der zumindest einen Nebenwicklung relativ zur Grundwicklung erreicht werden.

In einer Weiterbildung der Erfindung wird vorgeschlagen, dass die Akkuvorrichtung eine Gehäuseeinheit aufweist, wobei die Grundwicklung und/oder die zumindest eine Nebenwicklung zumindest teilweise in eine Wandung der Gehäuseeinheit eingebettet ist/sind. Insbesondere können die Grundwicklung und/oder die zumindest eine Nebenwicklung zumindest teilweise und vorzugsweise vollständig in die Wandung der Gehäuseeinheit eingespritzt sein. Insbesondere kann die zumindest eine Nebenwicklung in ein beweglich gelagertes Wandungselement der Gehäuseeinheit eingebettet sein, welches relativ zu der Grundwicklung der Induktivladespule schwenkbar gelagert ist. Hierdurch kann ein vorteilhaft einfaches Verschwenken der zumindest einen Nebenwicklung relativ zur Grundwicklung erreicht werden.

Ferner wird vorgeschlagen, dass die Induktivladespule eine Mehrzahl von weiteren Spulenwicklungen aufweist, welche an einem Außenumfang der Grundwicklung angeordnet sind. Des Weiteren wird vorgeschlagen, dass die Induktivladespule drei weitere Spulenwicklungen aufweist, welche um jeweils 120° versetzt an einem Außenumfang der Grundwicklung angeordnet sind. Hierdurch kann eine vorteilhaft große effektive Fläche der Induktivladespule erreicht werden.

Ferner wird ein Elektrogerät mit zumindest einer erfindungsgemäßen Akkuvorrichtung vorgeschlagen. Insbesondere kann die Akkuvorrichtung in einem Aufnahmeraum des Elektrogeräts aufgenommen sein. Unter einem "Elektrogerät" soll in diesem Zusammenhang insbesondere ein durch einen Benutzer tragbares Elektrogerät, wie beispielswiese ein Smartphone, ein Tablet, ein Laptop, ein E-Book-Reader, eine Handwerkzeugmaschine o.dgl., verstanden werden, welches zumindest teilweise durch die Akkuvorrichtung mit elektrischer Energie versorgt wird. Insbesondere entspricht ein maximales Außenmaß der Akkuvorrichtung zumindest im Wesentlichen einem maximalen Außenmaß des Elektrogeräts in einem Bereich eines Aunahmeraums für die Akkuvorrichtung. In einem montierten Zustand ist die Akkuvorrichtung zumindest im Wesentlichen von einem Handgriffgehäuse des Elektrogeräts umgeben. Unter "zumindest im Wesentlichen von einem Handgriffgehäuse umgeben" soll insbesondere verstanden werden, dass die mindestens eine erste Akkuzelle auf zumindest fünfzig Prozent einer Länge entlang der Haupterstreckungsrichtung auf einer Ebene senkrecht zu der Haupterstreckungsrichtung entlang eines Winkelbereichs von zumindest 180°, bevorzugt zumindest 270° und besonders bevorzugt von 360° von dem Handgriffgehäuse umschlossen ist. Bevorzugt ist die zumindest eine Induktivladespule in dem montierten Zustand zumindest im Wesentlichen innerhalb des Handgriffgehäuses angeordnet. Unter "zumindest im Wesentlichen innerhalb des Handgriffgehäuses angeordnet" soll insbesondere verstanden werden, dass zumindest fünfzig Prozent, vorteilhaft zumindest siebzig Prozent eines Volumens innerhalb des Handgriffgehäuses angeordnet sind. Bevorzugt sind das Elektrogerät und die Akkuvorrichtung werkzeuglos voneinander trennbar. Unter "werkzeuglos voneinander trennbar" soll insbesondere verstanden werden, dass die Akkuvorrichtung nach Befestigung an einem Elektrogerät von einem Benutzer von dem Elektrogerät beschädigungsfrei abgenommen werden kann. Bevorzugt ist die Akkuvorrichtung in das Elektrogerät einsteckbar oder einschiebbar ausgebildet. Hierdurch kann eine vorteilhaft geringe Grundfläche der Akkuvorrichtung und eine vorteilhaft kompakte Handwerkzeugmaschine erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Teilschnittdarstellung einer Akkuvorrichtung mit einer Induktionsladespule, welche eine Grundwicklung und drei Nebenwicklungen aufweist,
- Fig. 2: eine schematische Darstellung eines Verschwenkens der Nebenwicklungen relativ zu der Grundwicklung und
- Fig. 3: ein Elektrogerät mit der Akkuvorrichtung.

### Beschreibung des Ausführungsbeispiels

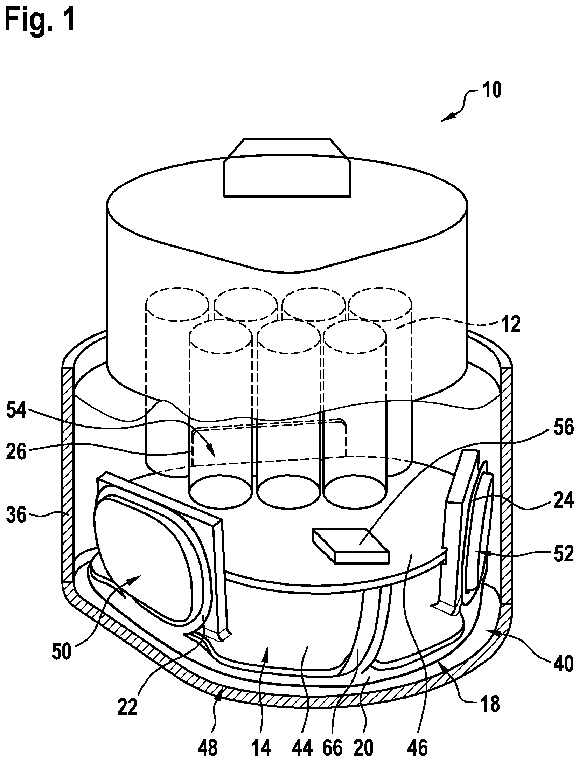

Figur 1 zeigt eine Teilschnittdarstellung einer Akkuvorrichtung 10. Die Akkuvorrichtung 10 ist insbesondere zu einer Versorgung eines hier nicht dargestellten Elektrogeräts mit elektrischer Energie vorgesehen. Die Akkuvorrichtung 10 ist beispielhaft von einer Handwerkzeugakkuvorrichtung gebildet. Die Akkuvorrichtung 10 weist eine Gehäuseeinheit 36 auf. Ferner weist die Akkuvorrichtung 10 eine Akkuzelleneinheit 12 und eine Induktivladeeinheit 14 auf. Die Akkuzelleneinheit 12 ist zur Speicherung von elektrischer Energie vorgesehen. Ferner ist die Akkuzelleneinheit 12 dazu vorgesehen, ein hier nicht dargestelltes Elektrogerät mit elektrischer Energie zu versorgen. Die Ackuzelleneinheit 12 ist in der Gehäuseeinheit 36 angeordnet. Die Induktivladeeinheit 14 ist dazu vorgesehen, elektrische Energie zur Aufladung der Akkuzelleneinheit 12 mittels Induktion zu empfangen. Die Induktivladeeinheit 14 weist eine Induktivladespule 18 auf, welche dazu vorgesehen ist, die elektrische Energie zur Ladung der Akkuzelleneinheit 12 zu empfangen. Die Induktivladespule 18 weist eine Grundwicklung 20 auf. Die Grundwicklung 20 besteht aus mehreren elektrische Leitern, die sich in Umfangsrichtung erstrecken. Die elektrischen Leiter sind in Umfangsrichtung um eine theoretische Wicklungsachse der Grundwicklung 20 gewickelt. Die Grundwicklung 20 weist eine Haupterstreckungsebene auf, die senkrecht zu ihrer Wicklungsachse ausgerichtet ist. Die Grundwicklung 20 ist dazu vorgesehen, während eines Ladevorgangs zumindest im Wesentlichen parallel zu einer Wicklungsebene einer Induktivladespule eines nicht dargestellten Induktionsladegeräts ausgerichtet zu sein. Die Induktivladespule 18 weist zumindest eine Nebenwicklung 22, 24, 26 auf. Eine Wicklungsachse der zumindest einen Nebenwicklung 22, 24, 26 verläuft zumindest im Wesentlichen senkrecht zu einer Wicklungsachse der Grundwicklung 20. Die Grundwicklung 20 ist elektrisch seriell mit der zumindest einen Nebenwicklung 22, 24, 26 verbunden. Die Induktivladespule 18 weist hier eine Mehrzahl von Nebenwicklungen 22, 24, 26 auf, welche an einem Außenumfang 40 der Grundwicklung 20 angeordnet sind. Vorzugsweise weist die Induktivladespule 18 drei Nebenwicklungen 22, 24, 26 auf, welche um jeweils 120° versetzt an dem Außenumfang 40 der Grundwicklung 20 angeordnet sind.

Die Induktivladeeinheit 14 weist eine Kerneinheit 44 und eine Elektronikeinheit 46 auf. Die Kerneinheit 44 besteht zumindest im Wesentlichen aus einem magnetischen Material, insbesondere einem Ferritmaterial. Die Grundwicklung 20 und die Nebenwicklungen 22, 24, 26 sind auf die Kerneinheit 44 gewickelt. Die Kerneinheit 44 bildet jeweils einen Wickelbereich 48, 50, 52, 54 für die Grundwicklung 20 und die Nebenwicklungen 22, 22, 24 aus. Die Elektronikeinheit 46 ist über eine Leitung 66 mit der Induktivladespule 18 verbunden. Ferner weist die Akkuvorrichtung 10 einen Gleichrichter 56 auf. Die Induktivladeeinheit 14 der Akkuvorrichtung 10 weist den Gleichrichter 56 auf. Die Elektronikeinheit 46 der Induktivladeeinheit 14 weist den Gleichrichter 56 auf. Der Gleichrichter 56 ist dazu vorgesehen, in einem Ladebetrieb eine an der Induktivladespule 18 induzierte Wechselspannung für die Akkuzelleneinheit 12 in eine Gleichspannung zu wandeln, um ein Aufladen der Akkuzelleneinheit 12 zu ermöglichen.

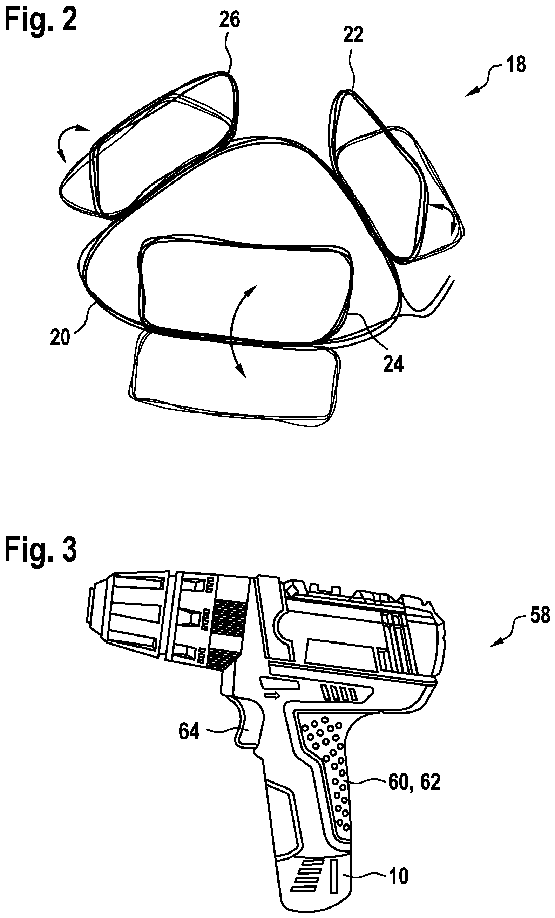

Die Nebenwicklungen 22, 24, 26 sind zu einer Anpassung der Ladefläche der Induktivladespule 18 relativ zu der Grundwicklung 20 schwenkbar. Die Nebenwicklungen 22, 24, 26 sind um zumindest im Wesentlichen parallel zu der Wicklungsebene der Grundwicklung 20 verlaufende Schwenkachsen und vorzugsweise um eine zumindest im Wesentlichen in der Wicklungsebene der Grundwicklung 20 verlaufenden Schwenkachsen relativ zu der Grundwicklung 20 schwenkbar. Zu einer Vergrößerung einer Ladefläche der Induktivladespule 18 sind die Nebenwicklungen 22, 24, 26 in eine Ebene mit der Grundwicklung 20 schwenkbar. Das Verschwenken ist in Figur 2 schematisch dargestellt. Die Grundwicklung 20 und/oder die zumindest eine Nebenwicklung 22, 24, 26 können zumindest teilweise auf ein flexibles Substrat aufgebracht sein. Alternativ oder zusätzlich können die Grundwicklung 20 und/oder die zumindest eine Nebenwicklung 22, 24, 26 zumindest teilweise in eine Wandung der Gehäuseeinheit 36 eingebettet sein.

Fig. 3 zeigt ein Elektrogerät 58 mit der Akkuvorrichtung 10. Das Elektrogerät 58 ist von einem Akku-Bohrschrauber gebildet, der einen Handgriff 60 mit einem Handgriffgehäuse 62, das eine Akkuaufnahme umschließt, aufweist. An dem Handgriff 60 ist ein Betätigungsschalter 64 angeordnet, der bei Betätigung einen Stromkreis zwischen der Ackuvorrichtung 10 und dem Elektrogerät 58 schließt, so dass das Elektrogerät 58 mit Strom für einen Betrieb versorgt wird.

## Patentansprüche

1. Akkuvorrichtung für eine Handwerkzeugmaschine mit einer Akkuzeileneinheit (12) und zumindest einer Induktivladeeinheit (14) zur Aufladung der Akkuzelleneinheit (12), wobei die Induktivladeeinheit (14) zumindest eine Induktivladespule (18) mit zumindest einer Grundwicklung (20) aufweist, wobei die Induktivladespule (18) zumindest eine Nebenwicklung (22, 24, 26) aufweist, deren Wicklungsachse zumindest im Wesentlichen senkrecht zu einer Wicklungsachse der Grundwicklung (20) verläuft, wobei die Grundwicklung (20) der Induktivladespule (18) elektrisch seriell mit der zumindest einen Nebenwicklung (22, 24, 26) der Induktivladespule (18) verbunden ist, **dadurch gekennzeichnet, dass** die zumindest eine Nebenwicklung (22, 24, 26) zu einer Vergrößerung einer Ladefläche der Induktivladespule (18) in eine Ebene mit der Grundwicklung (20) schwenkbar ist, wobei die zumindest eine Nebenwicklung (22, 24, 26) um eine zumindest im Wesentlichen parallel zu einer Wicklungsebene der Grundwicklung (20) verlaufende Schwenkachse schwenkbar ist.

2. Akkuvorrichtung nach einem der vorhergehenden Ansprüche, **dadurch gekennzeichnet, dass** die Grundwicklung (20) und/oder die zumindest eine Nebenwicklung (22, 24, 26) zumindest teilweise auf ein flexibles Substrat aufgebracht ist/sind.

3. Akkuvorrichtung nach einem der vorhergehenden Ansprüche, **gekennzeichnet durch** eine Gehäuseeinheit (36), wobei die Grundwicklung (20) und/oder die zumindest eine Nebenwicklung (22, 24, 26) zumindest teilweise ein eine Wandung der Gehäuseeinheit (36) eingebettet ist/sind.

4. Akkuvorrichtung nach einem der vorhergehenden Ansprüche, **dadurch gekennzeichnet, dass** die Induktivladespule (18) eine Mehrzahl von Nebenwicklungen (22, 24, 26) aufweist, welche an einem Außenumfang (40) der Grundwicklung (20) angeordnet sind.

5. Akkuvorrichtung nach einem der vorhergehenden Ansprüche, **dadurch gekennzeichnet, dass** die Induktivladespule (18) drei Nebenwicklungen (22, 24, 26) aufweist, welche um jeweils zumindest im Wesentlichen 120° versetzt an einem Außenumfang (40) der Grundwicklung (20) angeordnet sind.

6. Elektrogerät mit zumindest einer Akkuvorrichtung (10) nach einem der Ansprüche 1 bis 5.

## Claims

1. Rechargeable battery apparatus for a handheld power tool comprising a rechargeable battery cell unit (12) and at least one inductive charging unit (14) for charging the rechargeable battery cell unit (12), wherein the inductive charging unit (14) has at least one inductive charging coil (18) with at least one main winding (20), wherein the inductive charging coil (18) has at least one secondary winding (22, 24, 26), the winding axis of which runs at least substantially perpendicularly to a winding axis of the main winding (20), wherein the main winding (20) of the inductive charging coil (18) is connected electrically in series to the at least one secondary winding (22, 24, 26) of the inductive charging coil (18), **characterized in that** the at least one secondary winding (22, 24, 26) can be pivoted into a plane with the main winding (20) for the purpose of increasing the size of a charging area of the inductive charging coil (18), wherein the at least one secondary winding (22, 24, 26) can be pivoted about a pivot axis which runs at least substantially parallel to a winding plane of the main winding (20).

2. Rechargeable battery apparatus according to one of the preceding claims, **characterized in that** the main winding (20) and/or the at least one secondary winding (22, 24, 26) are/is at least partially applied to a flexible substrate.

3. Rechargeable battery apparatus according to either of the preceding claims, **characterized by** a housing unit (36), wherein the main winding (20) and/or the at least one secondary winding (22, 24, 26) are/is at least partially embedded in a wall of the housing unit (36).

4. Rechargeable battery apparatus according to one of the preceding claims, **characterized in that** the inductive charging coil (18) has a plurality of secondary windings (22, 24, 26) which are arranged on an outer circumference (40) of the main winding (20).

5. Rechargeable battery apparatus according to one of the preceding claims, **characterized in that** the inductive charging coil (18) has three secondary windings (22, 24, 26) which are arranged in a manner offset through in each case at least substantially 120° on an outer circumference (40) of the main winding (20).

6. Electrical device comprising at least one rechargeable battery apparatus (10) according to one of Claims 1 to 5.

## Revendications

1. Dispositif accumulateur destiné à un outil à main et comprenant une unité d'élément accumulateur (12) et au moins une unité de charge inductive (14) destinée à charger l'unité d'élément accumulateur (12), l'unité de charge inductive (14) comportant au moins une bobine de charge inductive (18) pourvue d'au moins un enroulement de base (20), la bobine de charge inductive (18) comportant au moins un enroulement secondaire (22, 24, 26) dont l'axe d'enroulement est au moins sensiblement perpendiculaire à un axe d'enroulement de l'enroulement de base (20), l'enroulement de base (20) de la bobine de charge inductive (18) étant relié électriquement en série à l'au moins un enroulement secondaire (22, 24, 26) de la bobine de charge inductive (18), **caractérisé en ce que** l'au moins un enroulement secondaire (22, 24, 26) peut pivoter dans un plan qui comporte l'enroulement de base (20) pour augmenter une surface de charge de la bobine de charge inductive (18), l'au moins un enroulement secondaire (22, 24, 26) pouvant pivoter sur un axe de pivotement s'étendant au moins sensiblement parallèlement à un plan d'enroulement de l'enroulement de base (20).

2. Dispositif accumulateur selon l'une des revendications précédentes, **caractérisé en ce que** l'enroulement de base (20) et/ou l'au moins un enroulement secondaire (22, 24, 26) sont au moins partiellement appliqués sur un substrat souple.

3. Dispositif accumulateur selon l'une des revendications précédentes, **caractérisé par** une unité de boîtier (36), l'enroulement de base (20) et/ou l'au moins un enroulement secondaire (22, 24, 26) étant au moins partiellement incorporés dans une paroi de l'unité boîtier (36).

4. Dispositif accumulateur selon l'une des revendications précédentes, **caractérisé en ce que** la bobine de charge inductive (18) comporte une pluralité d'enroulements secondaires (22, 24, 26) qui sont disposés sur une circonférence extérieure (40) de l'enroulement de base (20).

5. Dispositif accumulateur selon l'une des revendications précédentes, **caractérisé en ce que** la bobine de charge inductive (18) comporte trois enroulements secondaires (22, 24, 26) qui sont disposés de manière décalée au moins sensiblement de 120° sur une circonférence extérieure (40) de l'enroulement de base (20).

6. Appareil électrique comprenant au moins un dispositif accumulateur (10) selon l'une des revendications 1 à 5.
